# EUROPEAN PATENT APPLICATION

(11) **EP 2 996 369 A1**
(43) Date of publication of application: **16.03.2016**
(21) Application number: 14794075.3
(22) Date of filing: 07.05.2014
(51) Int. Cl.: H04W 16/02, H04W 16/32, H04W 28/16

(54) **WIRELESS COMMUNICATION SYSTEM AND WIRELESS BASE STATION DEVICE**

(30) Priority: 09.05.2013 JP 2013099610
(71) Applicant: KDDI Corporation, Tokyo 163-8003 (JP)
(72) Inventor: WANG, Xiaoqiu, Fujimino-shi Saitama 356-8502 (JP); YAMAMOTO, Toshiaki, Fujimino-shi Saitama 356-8502 (JP); OHSEKI, Takeo, Fujimino-shi Saitama 356-8502 (JP); AKIMOTO, Yosuke, Fujimino-shi Saitama 356-8502 (JP); KONISHI, Satoshi, Fujimino-shi Saitama 356-8502 (JP)
(74) Representative: Tostmann, Holger Carl
(86) International application number: PCT/JP2014/062241
(87) International publication number: WO 2014/181793

(57) **Abstract**

In a wireless communication system including a wireless terminal device wirelessly connectible to both a macro-cell base station and a small-cell base station, all the user-plane signals destined for the wireless terminal device are transmitted to the small-cell base station; a VoIP signal among the user-plane signals destined for the wireless terminal device is transmitted to the macro-cell base station; the VoIP signal is wirelessly transmitted from the macro-cell base station to the wireless terminal device; any user-plane signal, among the user-plane signals destined for the wireless terminal device, other than the VoIP signal is wirelessly transmitted from the small-cell base station to the wireless terminal device.

## Description

### TECHNICAL FIELD

The present invention relates to a wireless communication system and a wireless base station device.

The present application claims priority on Japanese Patent Application No. 2013-99610 filed May 9, 2013, the entire content of which is incorporated herein by reference.

### BACKGROUND ART

Recently, function sharing techniques for macro cells and small cells have been studied in connection with wireless communication networks called HetNet (Heterogeneous Network).

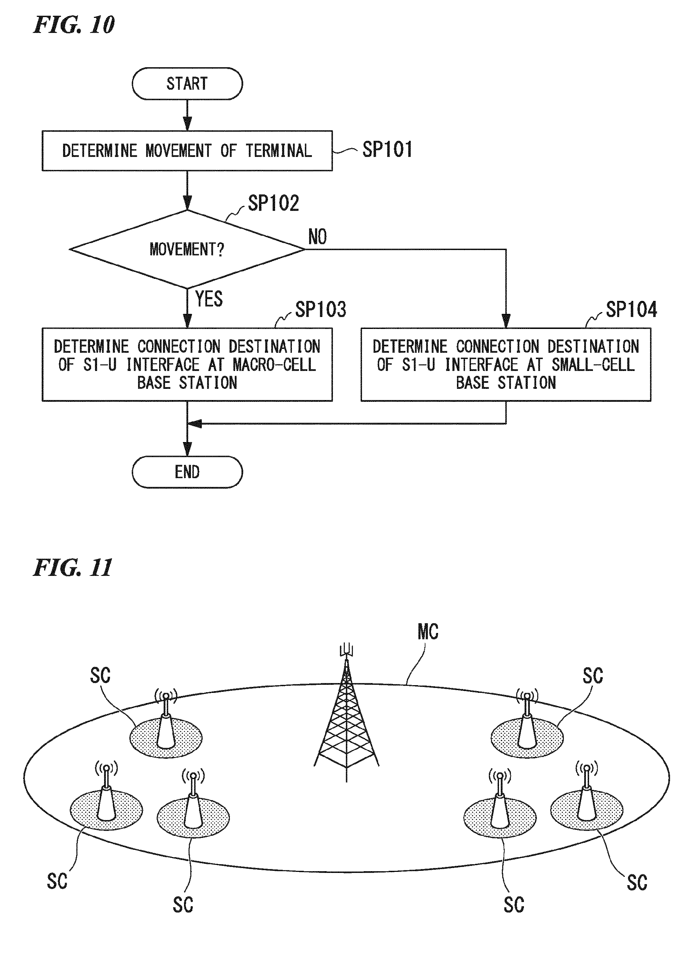

Fig. 11 shows an example of the configuration of HetNet. In Fig. 11, a macro cell MC has a broad coverage (i.e. an area providing a communication service) using a relatively low frequency band. Small cells SC, each of which has a narrow coverage using a relatively high frequency band, are each located to overlap the coverage thereof with the coverage of a macro cell.

As the conventional arts concerning the function sharing techniques for macro cells and small cells, for example, Non-Patent Literature Document 1 teaches a macro cell covering a control plane (C-plane) for small cells.

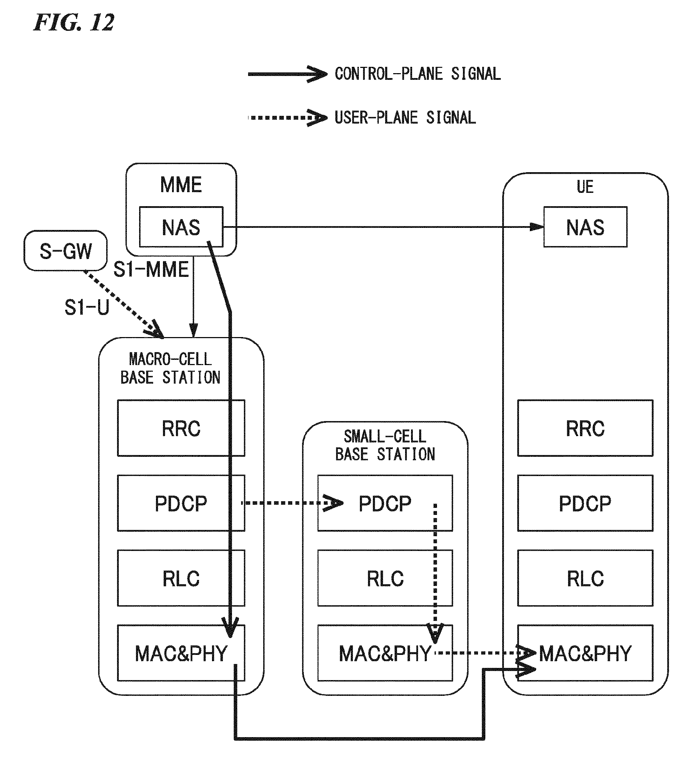

Fig. 12 shows an example of the conventional protocol configuration. Fig. 12 is a diagram of a protocol configuration according to a wireless communication system called LTE (Long Term Evolution) which has been standardized by 3GPP (3rd Generation Partnership Project).

In Fig. 12, a user's wireless terminal device (UE: User Equipment) is located in a small cell such that the user equipment can wirelessly communicate with a macro-cell wireless base station device (hereinafter, simply referred to as a macro-cell base station) and a small-cell wireless base station device (hereinafter, simply referred to as a small-cell base station). Herein, a user-plane (or U-plane) signal destined for the UE wirelessly connected to a small-cell base station is sent to a small-cell base station through a macro-cell base station, and then the user-plane signal is wirelessly transmitted by the small-cell base station. A control-plane signal destined for the UE wirelessly connected to a small-cell base station is wirelessly transmitted by a macro-base station. For example, Non-Patent Literature Document 2 discloses a protocol configuration of LTE.

### CITATION LIST

### NON-PATENT LITERATURE DOCUMENT

Non-Patent Literature Document 1: Benjebbour Anass, Kishigami Yasuhisa, Ishii Keisuke, Nakamura Takehiro, "Conceptual Views and Radio Access Technologies for Future Evolution of LTE-A", Singaku-Giho, vol. 112, no. 192, RCS2012-100, pp. 25-30, August of 2012
Non-Patent Literature Document 2: Ohkubo Naoto, Umesh Anneal, Iwamura Mikio, Sin Hakko, "LTE Service "Xi" (Xrossy) Special Feature -Challenge for Smart Innovation-, Summary of wireless communication system of LTE achieving high speed/large capacity/low delay", NTT DOCOMO Technical Journal, VOL. 19, No. 1, April of 2011

### SUMMARY OF INVENTION

### TECHNICAL PROBLEM

In the conventional function sharing techniques for macro cells and small cells, however, both the user-plane signal and the control-plane signal, which are wirelessly transmitted to the UE wirelessly connected to a small-cell base station, should go through a macro-cell base station. This may increase the load of a macro-cell base station. Since a large-capacity user-plane signal destined for the UE wirelessly connected to a small-cell base station is transferred from a macro-cell base station to a small-cell base station, it is necessary to prepare a low-delay backhaul having a large capacity between a macro-cell base station and a small-cell base station; hence, this makes it difficult to widely spread small cells.

The present invention is created in consideration of the foregoing circumstances. It is an object of the invention to provide a wireless communication system and a wireless base station device, which can reduce a load centralized in one cell base station irrespective of the function sharing between a first cell and a second cell, which overlap with each other in terms of the coverage, and which can ease requirements of a backhaul between a first cell base station and a second cell base station.

### SOLUTION TO PROBLEM

A first aspect of the present invention is directed to a wireless communication method adapted to a wireless communication system including a wireless terminal device wirelessly connectible to both a wireless base station device of a first cell and a wireless base station device of a second cell whose coverage overlaps coverage of the first cell, comprising: transmitting all user-plane signals destined for the wireless terminal device to the wireless base station device of the second cell; transmitting a specific user-plane signal, among the user-plane signals destined for the wireless terminal device, from the wireless base station of the second cell to the wireless base station device of the first cell, and then wirelessly transmitting the specific user-plane signal from the wireless base station device of the first cell to the wireless terminal device; and wirelessly transmitting other user-plane signals other than the specific user-plane signal, among the user-plane signals destined for the wireless terminal device, from the wireless base station device of the second cell to the wireless terminal device.

A second aspect of the present invention is directed to a wireless communication method adapted to a wireless communication system including a wireless terminal device wirelessly connectible to both a wireless base station device of a first cell and a wireless base station device of a second cell whose coverage overlaps coverage of the first cell, comprising: wirelessly transmitting a specific user-plane signal among the user-plane signals from the wireless terminal device to the wireless base station device of the first cell, and then transmitting the specific user-plane signal from the wireless base station device of the first cell to the wireless base station device of the second cell; wirelessly transmitting other user-plane signals other than the specific user-plane signal from the wireless terminal device to the wireless base station device of the second cell; and transmitting all the user-plane signals from the wireless base station device of the second cell to a core network.

A third aspect of the present invention is directed to a wireless communication method adapted to a wireless communication system including a wireless terminal device wirelessly connectible to both a wireless base station device of a first cell and a wireless base station device of a second cell whose coverage overlaps coverage of the first cell, thus implementing a first method or a second method with the wireless terminal device. The first method includes the steps of: transmitting all user-plane signals destined for the wireless terminal device to the wireless base station device of the second cell; transmitting a specific user-plane signal, among the user-plane signals destined for the wireless terminal device, from the wireless base station of the second cell to the wireless base station device of the first cell, and then wirelessly transmitting the specific user-plane signal from the wireless base station device of the first cell to the wireless terminal device; and wirelessly transmitting other user-plane signals other than the specific user-plane signal, among the user-plane signals destined for the wireless terminal device, from the wireless base station device of the second cell to the wireless terminal device. The second method includes the steps of: transmitting all user-plane signals destined for the wireless terminal device to the wireless base station of the first cell; wirelessly transmitting a specific user-plane signal among the user-plane signals destined for the wireless terminal device from the wireless base station device of the first cell to the wireless terminal device; transmitting other user-plane signals other than the specific user-plane signal, among the user-plane signals destined for the wireless terminal device, from the wireless base station device of the first cell to the wireless base station device of the second cell; and wirelessly transmitting other user-plane signals other than the specific user-plane signal from the wireless base station device of the second cell to the wireless terminal device.

A fourth aspect of the present invention is directed to a wireless communication method adapted to a wireless communication system including a wireless terminal device wirelessly connectible to both a wireless base station device of a first cell and a wireless base station device of a second cell whose coverage overlaps coverage of the first cell, thus implementing a first method or a second method. The first method includes the steps of: wirelessly transmitting a specific user-plane signal among the user-plane signals from the wireless terminal device to the wireless base station device of the first cell, and then transmitting the specific user-plane signal from the wireless base station device of the first cell to the wireless base station device of the second cell; wirelessly transmitting other user-plane signals other than the specific user-plane signal from the wireless terminal device to the wireless base station device of the second cell; and transmitting all the user-plane signals from the wireless base station device of the second cell to a core network. The second method includes the steps of: wirelessly transmitting a specific user-plane signal from the wireless terminal device to the wireless base station device of the first cell; wirelessly transmitting other user-plane signals other than the specific user-plane signal from the wireless terminal device to the wireless base station device of the second cell, and then transmitting the other user-plane signals other than the specific user-plane signal from the wireless base station device of the second cell to the wireless base station device of the first cell; and transmitting all the user-plane signals from the wireless base station device of the first cell to the core network.

A fifth aspect of the present invention is directed to the wireless communication method according to the third or fourth aspect, wherein the first cell is a macro cell while the second cell is a small cell.

A sixth aspect of the present invention is directed to the wireless communication method according to the fifth aspect, wherein it is determined whether to use the first method or the second method based on the movement status of the wireless terminal device.

A seventh aspect of the present invention is directed to the wireless communication method according to the sixth aspect, wherein the first method is used for the wireless terminal device whose movement is not determined while the second method is used for the wireless terminal device whose movement is determined.

An eighth aspect of the present invention is directed to the wireless communication method according to any one of the first to seventh aspects, wherein the specific user-plane signal is a user-plane signal indicating a specific QoS (Quality of Service).

A ninth aspect of the present invention is directed to the wireless communication method according to the eighth aspect, wherein bidirectional data transfer based on the QoS is carried out in a user plane between the wireless base station device of the first cell and the wireless base station device of the second cell.

A tenth aspect of the present invention is directed to the wireless communication method according to any one of the first to ninth aspects, wherein the specific user-plane signal is a VoIP (Voice over Internet Protocol) signal.

An eleventh aspect of the present invention is directed to a wireless base station device adapted to a wireless communication system including a wireless terminal device wirelessly connectible to both a wireless base station device of a first cell and a wireless base station device of a second cell whose coverage overlaps coverage of the first cell. That is, the wireless base station device of the second cell includes a core network communication part configured to receive all user-plane signals destined for the wireless terminal device from a core network, an inter-station communication part configured to transmit a specific user-plane signal, among the user-plane signals destined for the wireless terminal device, to the wireless base station device of the first cell, and a wireless communication part configured to wirelessly transmit other user-plane signals other than the specific user-plane signal, among the user-plane signals destined for the wireless terminal device, to the wireless terminal device.

A twelfth aspect of the present invention is directed to a wireless base station device adapted to a wireless communication system including a wireless terminal device wirelessly connectible to both a wireless base station device of a first cell and a wireless base station device of a second cell whose coverage overlaps coverage of the first cell. That is, the wireless base station device of the second cell includes an inter-station communication part configured to receive a specific user-plane signal, among the user-plane signals from the wireless terminal device, via the wireless base station device of the first cell, a wireless communication part configured to wirelessly receive other user-plane signals other than the specific user-plane signal, among the user-plane signals from the wireless terminal device, from the wireless terminal device, and a core network communication part configured to transmit all the user-plane signals from the wireless terminal device to a core network.

A thirteenth aspect of the present invention is directed to a wireless base station device adapted to a wireless communication system including a wireless terminal device wirelessly connectible to both a wireless base station device of a first cell and a wireless base station device of a second cell whose coverage overlaps coverage of the first cell. That is, the wireless base station device of the first cell includes an inter-station communication part configured to receive a specific user-plane signal among the user-plane signals destined for the wireless terminal device from the wireless base station device of the second cell configured to receive all the user-plane signals destined for the wireless terminal device from a core network, and a wireless communication part configured to wirelessly transmit the specific user-plane signal to the wireless terminal device.

A fourteenth aspect of the present invention is directed to a wireless base station device adapted to a wireless communication system including a wireless terminal device wirelessly connectible to both a wireless base station device of a first cell and a wireless base station device of a second cell whose coverage overlaps coverage of the first cell. That is, the wireless base station device of the first cell includes a wireless communication part configured to wirelessly receive a specific user-plane signal, among the user-plane signals from the wireless terminal device, from the wireless terminal device, and an inter-station communication part configured to transmit the specific user-plane signal to the wireless base station device of the second cell configured to transmit all the user-plane signals from the wireless terminal device to a core network.

Fifteenth aspect of the present invention is directed to the wireless base station device according to any one of the eleventh to fourteenth aspects, wherein the first cell is a macro cell while the second cell is a small cell.

A sixteenth aspect of the present invention is directed to the wireless base station device according to the fifteenth aspect, wherein the wireless terminal device is a wireless terminal device whose movement is not determined.

A seventeenth aspect of the present invention is directed to a wireless base station device adapted to a wireless communication system including a wireless terminal device wirelessly connectible to both a wireless base station device of a first cell and a wireless base station device of a second cell whose coverage overlaps coverage of the first cell. That is, the wireless base station device of the first cell includes a core network communication part configured to receive all user-plane signals destined for the wireless terminal device from a core network, a wireless communication part configured to wirelessly transmit a specific user-plane signal, among the user-plane signals destined for the wireless terminal device, to the wireless terminal device, and an inter-station communication part configured to transmit other user-plane signals other than the specific user-plane signal, among the user-plane signals destined for the wireless terminal device, to the wireless base station device of the second cell.

An eighteenth aspect of the present invention is directed to a wireless base station device adapted to a wireless communication system including a wireless terminal device wirelessly connectible to both a wireless base station device of a first cell and a wireless base station device of a second cell whose coverage overlaps coverage of the first cell. That is, the wireless base station device of the first cell includes an inter-station communication part configured to receive other user-plane signals other than a specific user-plane signal, among user-plane signals destined for the wireless terminal device, via the wireless base station device of the second cell, a wireless communication part configured to wirelessly receive the specific user-plane signal among the user-plane signals from the wireless terminal device from the wireless terminal device, and a core network communication part configured to transmit all the user-plane signals from the wireless terminal device to a core network.

A nineteenth aspect of the present invention is directed to a wireless base station device adapted to a wireless communication system including a wireless terminal device wirelessly connectible to both a wireless base station device of a first cell and a wireless base station device of a second cell whose coverage overlaps coverage of the first cell. That is, the wireless base station device of the second cell includes an inter-station communication part configured to receive other user-plane signals other than a specific user-plane signal among the user-plane signals destined for the wireless terminal device from the wireless base station device of the first cell configured to receive all the user-plane signals destined for the wireless terminal device from a core network, and a wireless communication part configured to wirelessly transmit the other user-plane signals other than the specific user-plane signal to the wireless terminal device.

A twentieth aspect of the present invention is directed to a wireless base station device adapted to a wireless communication system including a wireless terminal device wirelessly connectible to both a wireless base station device of a first cell and a wireless base station device of a second cell whose coverage overlaps coverage of the first cell. That is, the wireless base station device of the second cell includes a wireless communication part configured to wirelessly receive other user-plane signals other than a specific user-plane signal, among the user-plane signals from the wireless terminal device, from the wireless terminal device, and an inter-station communication part configured to transmit the other user-plane signals other than the specific user-plane signal to the wireless base station device of the first cell configured to transmit all the user-plane signals from the wireless terminal device to a core network.

A twenty-first aspect of the present invention is directed to the wireless base station device according to any one of the seventeenth to twentieth aspects, wherein the first cell is a macro cell while the second cell is a small cell.

A twenty-second aspect of the present invention is directed to the wireless base station device according to the twenty-first aspect, wherein the wireless terminal device is a wireless terminal device whose movement is determined.

A twenty-third aspect of the present invention is directed to the wireless base station device according to any one of the eleventh to twenty-second aspects, wherein the specific user-plane signal is a user-plane signal indicating a specific QoS (Quality of Service).

A twenty-fourth aspect of the present invention is directed to the wireless base station device according to the twenty-third aspect, wherein bidirectional data transfer based on the QoS is carried out in a user plane between the wireless base station device of the first cell and the base station device of the second cell.

A twenty-fifth aspect of the present invention is directed to the wireless base station device according to any one of the eleventh to twenty-fourth aspects, wherein the specific user-plane signal is a VoIP (Voice over Internet Protocol) signal.

### ADVANTAGEOUS EFFECTS OF INVENTION

In the function sharing between a first cell and a second cell which overlap with each other in terms of the coverage, the present invention can achieve an effect of reducing a load centralized in one cell base station. Additionally, the present invention can achieve an effect of easing requirements of a backhaul between a first cell base station and a second cell base station.

### BRIEF DESCRIPTION OF DRAWINGS

Fig. 1 is a schematic diagram showing an example of a wireless communication system applicable to the embodiment of the present invention.
Fig. 2 is a block diagram showing a macro-cell base station and a small-cell base station shown in Fig. 1.
Fig. 3 is a block diagram of a wireless terminal device shown in Fig. 1.
Fig. 4 is a block diagram used to explain the operation of a wireless communication system according to the first embodiment of the present invention.
Fig. 5 is a sequence chart showing a sequence of the wireless communication system according to the first embodiment of the present invention.
Fig. 6 is a sequence chart showing another sequence of the wireless communication system according to the first embodiment of the present invention.
Fig. 7 is a block diagram used to explain the operation of a wireless communication system according to a second embodiment of the present invention.
Fig. 8 is a sequence chart showing a sequence of the wireless communication system shown in Fig. 7.
Fig. 9 is a sequence chart showing another sequence of the wireless communication system shown in Fig. 7.
Fig. 10 is a flowchart showing the processing of the wireless communication system according to the second embodiment of the present invention.
Fig. 11 is an explanatory diagram showing an example of the configuration of HetNet.
Fig. 12 is a block diagram showing the operation of the conventional HetNet.

### DESCRIPTION OF EMBODIMENTS

Hereinafter, the present invention will be described by way of examples with reference to the drawings. The present embodiment will be described with respect to an example of a wireless communication system, i.e. LTE.

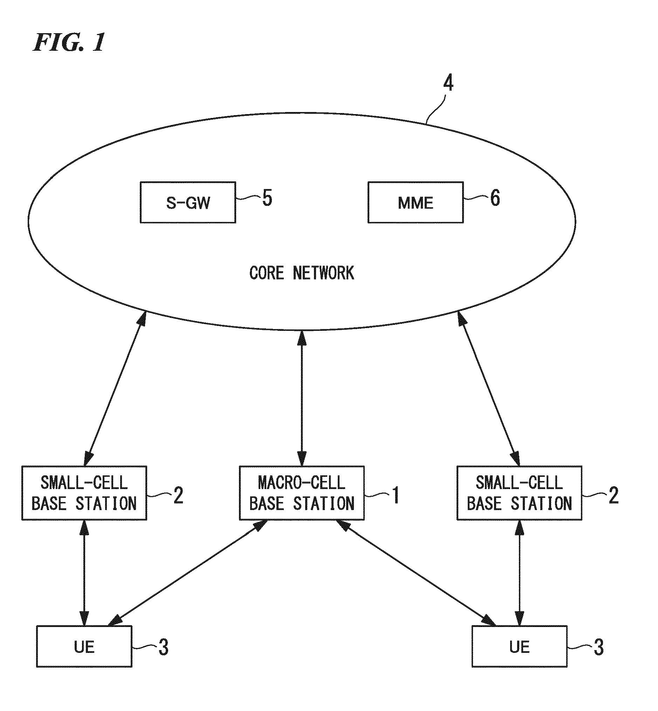

Fig. 1 is a schematic diagram of a wireless communication system applicable to the embodiment of the present invention. In Fig. 1, a macro-cell base station 1 and small-cell base stations 2 are connected to a core network 4. The core network 4 includes an S-GW (Serving-Gateway) 5 and an MME (Mobility Management Entity) 6. The macro-cell base station 1 and the small-cell base stations 2 communicate with the S-GW 5 and the MME 6.

The small-cell base station 2 has a small-cell coverage which overlaps the coverage of the macro-cell base station 1. Herein, a macro cell and a small cell are designed to use different frequency bands. That is, a macro cell has a broad coverage using a relatively low frequency band. A small cell has a narrow coverage using a relatively high frequency band. A wireless terminal device (UE) 3 located in a small cell can be wirelessly connected to both the macro-cell base station 1 and the small-cell base station 2.

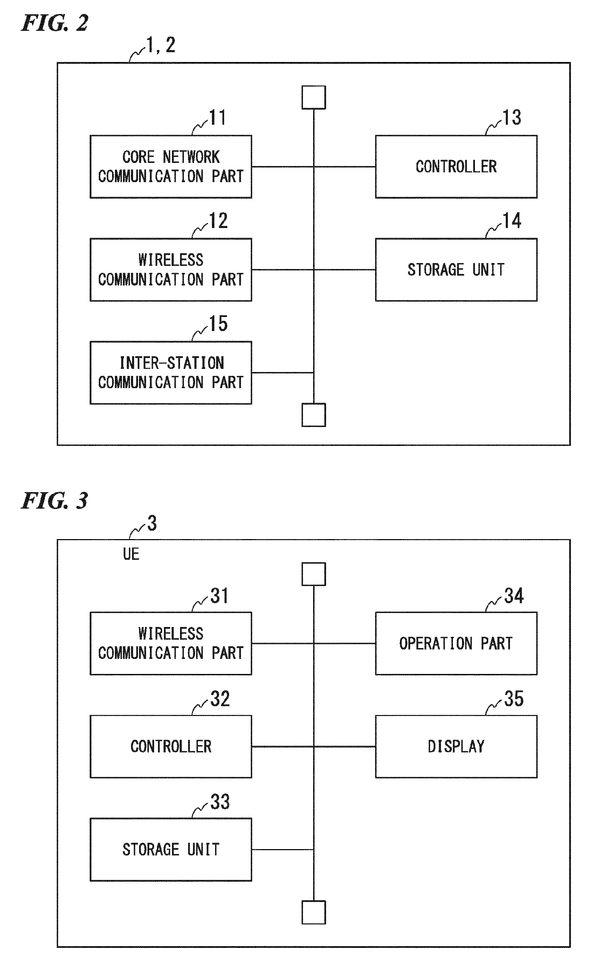

Fig. 2 is a block diagram showing an example of the configuration of the macro-cell base station 1 and the small-cell base station 2. In Fig. 2, a core-network communication part 11, a wireless communication part 12, a controller 13, a storage unit 14, and an inter-station communication part 15 are connected together to mutually transmit and receive data. The core-network communication part 11 communicates with the S-GW 5 and the MME 6 of the core network 4. The wireless communication part 12 wirelessly communicates with the UE 3. The inter-station communication part 15 communicates with another base station. The controller 13 controls the operation of the base station. The storage unit 14 stores data.

Fig. 3 is a block diagram showing an example of the configuration of the UE 3. In Fig. 3, a wireless communication part 31, a controller 32, a storage unit 33, an operation part 34, and a display 35 are connected together to mutually transmit and receive data. The wireless communication part 31 located in a macro cell can be wirelessly connected to the macro-cell base station 1. Alternatively, the wireless communication part 31 located in a small cell can be wirelessly connected to both the macro-cell base station 1 and the small-cell base station 2. The wireless communication part 31 communicates with another device through a base station wirelessly connected thereto.

The controller 32 controls the operation of the UE 3. The storage unit 33 stores data. The operation part 34 including an input device such as a keyboard, a ten-key unit, and a mouse is configured to input data according to a user's operation. The display 35 including a display device such as a liquid crystal display is configured to display data.

Next, the operation of the wireless communication system will be described. As a method of transmitting signals to the UE 3, it is possible to use any one of a unicast communication, a multicast communication, and a broadcast communication.

### <First Embodiment>

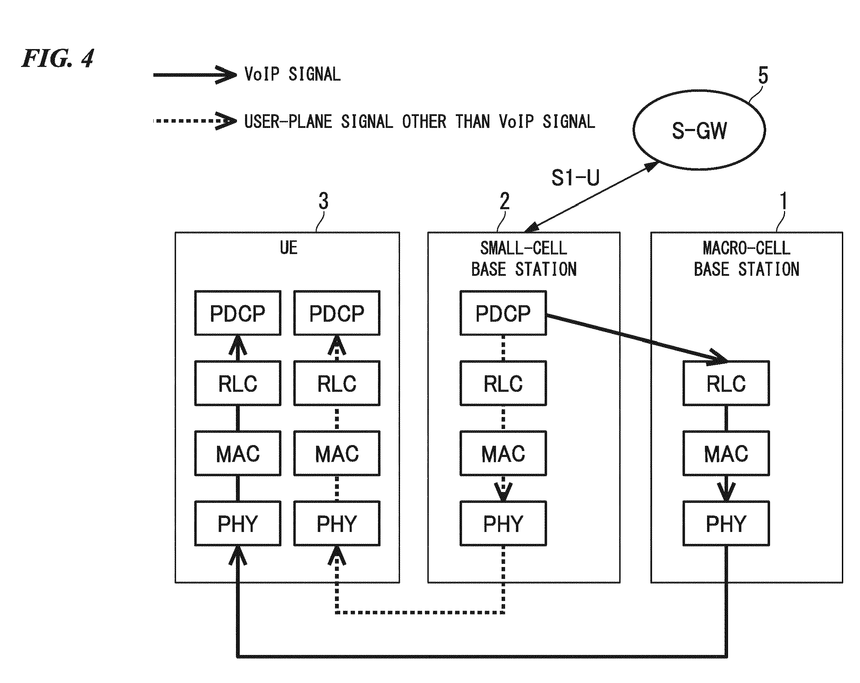

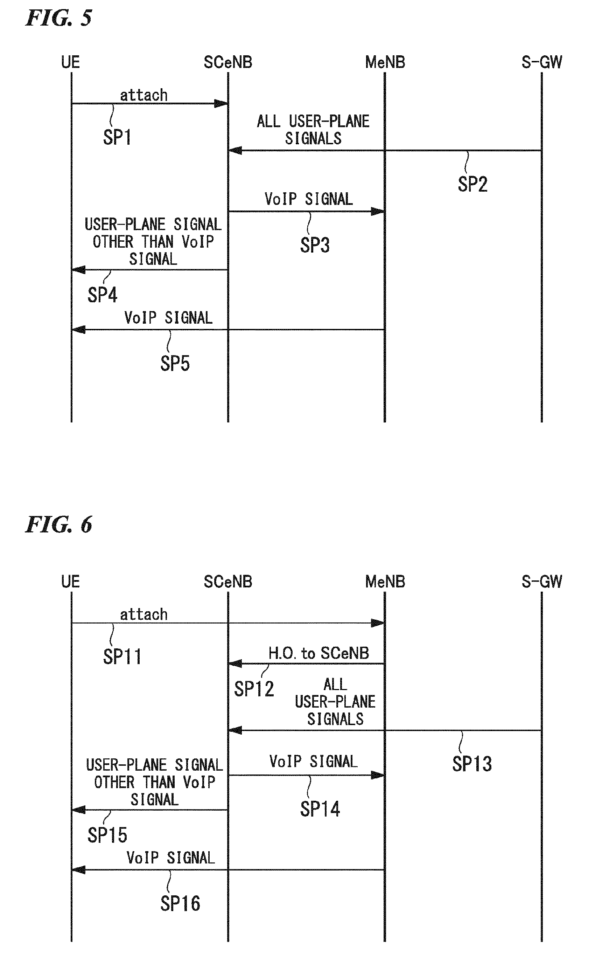

Fig. 4 is an explanatory diagram used to explain the operation of a wireless communication system according to the first embodiment. Figs. 5 and 6 are sequence charts showing the sequences of the wireless communication system of the present embodiment.

First, a signal flow of the first embodiment will be described with reference to Fig. 4. In Fig. 4, the UE 3 located in a small cell can be wirelessly connected to both the macro-cell base station 1 and the small-cell base station 2. The S-GW 5 transmits all the user-plane signals destined for the UE 3 towards the small-cell base station 2 via an S1-U interface.

The small-cell base station 2 receives user-plane signals destined for the UE 3 from the S-GW 5 via the S1-U interface so as to transmit a specific user-plane signal, among the received user-plane signal, to the macro-cell base station 1. As a specific user-plane signal, for example, it is possible to name a user-plane signal applying a specific QoS (Quality of Service). As a user-plane signal applying a specific QoS, for example, it is possible to name a VoIP (Voice over Internet Protocol) communication signal (i.e. a VoIP signal).

The macro-cell base station 1 receives a specific user-plane signal destined for the UE 3 from the small-cell base station 2 so as to wirelessly transmit the specific user-plane signal to the UE 3. Additionally, the small-cell base station 2 receives user-plane signals destined for the UE 3 from the S-GW 5 via the S1-U interface so as to wirelessly transmit any user-plane signal other than the specific user-plane signal to the UE 3.

The first embodiment will be described with respect to a VoIP signal as an example of a specific user-plane signal.

As shown in Fig. 4, the small-cell base station 2 receives user-plane signals destined for the UE 3 from the S-GW 5 through the S1-U interface so as to transmit a VoIP signal, among the received user-plane signals, to the macro-cell base station 1. The macro-cell base station 1 receives the VoIP signal destined for the UE 3 from the small-cell base station 2 so as to wirelessly transmit the VoIP signal to the UE 3. The small-cell base station 2 receives user-plane signals destined for the UE 3 from the S-GW 5 through the S1-U interface so as to wirelessly transmit any user-plane signal other than the VoIP signal to the UE 3.

As the protocol configuration applied between the small-cell base station 2 and the macro-cell base station 1, it is possible to name protocol configurations 1-1, 1-2, and 1-3 as follows.

### (Protocol Configuration 1-1)

A specific user-plane signal is delivered to the macro-cell base station 1 in the stage of the input data (SDU (Service Data Unit)) to the PDCP (Packet Data Convergence Protocol) layer of the small-cell base station 2.

### (Protocol Configuration 1-2)

A specific user-plane signal is delivered to the macro-cell base station 1 in the stage of the output data (PDU (Protocol Data Unit)) from the PPCP layer of the small-cell base station 2. Fig. 4 shows an example of the protocol configuration 1-2.

### (Protocol Configuration 1-3)

A specific user-plane signal is delivered to the macro-cell base station 1 in the stage of the output data (PDU) from the RLC (Radio Link Control) layer of the small-cell base station 2.

For example, the small-cell base station 2 can be used as the serving base station (Serving eNodeB (evolved Node B)) for the UE 3 in the control plane. In this case, any control-plane signal destined for the UE 3 is wirelessly transmitted from the small-cell base station 2 to the UE 3. The present embodiment will be described with respect to the small-cell base station 2 illustrated as an example of a serving base station for the UE 3 in the control plane.

Next, the sequences of the first embodiment will be described with reference to Figs. 5 and 6. Fig. 5 shows the sequence in which the UE 3 is firstly connected to the small-cell base station 2 (SCeNB). Fig. 6 shows the sequence in which the UE 3 is firstly connected to the macro-cell base station 1 (MeNB).

First, the sequence in which the UE 3 is firstly connected to the small-cell base station 2 (SCeNB) will be described with reference to Fig. 5.
(Step SP1)
   The UE 3 makes "Attach" with the small-cell base station 2 (SCeNB).
(Step SP2)
   The S-GW 5 transmits all the user-plane signals destined for the UE 3 to the small-cell base station 2 (SCeNB) through the S1-U interface.
(Step SP3)
   The small-cell base station 2 (SCeNB) receives the user-plane signals destined for the UE 3 from the S-GW 5 through the S1-U interface so as to transmit a VoIP signal, among the received user-plane signals, to the macro-cell base station 1 (MeNB).
(Step SP4)
   The small-cell base station 2 (SCeNB) receives the user-plane signals destined for the UE 3 from the S-GW 5 through the S1-U interface so as to wirelessly transmit any user-plane signal other than the VoIP signal to the UE 3.
(Step SP5)
   The macro-cell base station 1 (MeNB) receives the VoIP signal destined for the UE 3 from the small-cell base station 2 (SCeNB) so as to wirelessly transmit the VoIP signal to the UE 3.

Next, the sequence in which the UE 3 is firstly connected to the macro-cell base station 1 (MeNB) will be described with reference to Fig. 6.
(Step SP11)
   The UE 3 makes "Attach" with the macro-cell base station 1 (MeNB).
(Step SP12)
   The macro-cell base station 1 (MeNB) carries out a handover of the UE 3 with the small-cell base station 2 (SCeNB).
(Step SP13)
   The S-GW 5 transmits all the user-plane signals destined for the UE 3 to the small-cell base station 2 (SCeNB) through the S1-U interface.
(Step SP14)
   The small-cell base station 2 (SCeNB) receives the user-plane signals destined for the UE 3 from the S-GW 5 through the S1-U interface so as to transmit a VoIP signal, among the received user-plane signals, to the macro-cell base station 1 (MeNB).
(Step SP15)
   The small-cell base station 2 (SCeNB) receives the user-plane signals destined for the UE 3 from the S-GW 5 through the S1-U interface so as to wirelessly transmit any user-plane signal other than the VoIP signal to the UE 3.
(Step SP16)
   The macro-cell base station 1 (MeNB) receives the VoIP signal destined for the UE 3 from the small-cell base station 2 (SCeNB) so as to wirelessly transmit the VoIP signal to the UE 3.

According to the first embodiment, a specific user-plane signal, among the user-plane signals destined for the UE 3, is wirelessly transmitted from the macro-cell base station 1 to the UE 3, while any user-plane signal other than the specific user-plane signal is wirelessly transmitted from the small-cell base station 2 to the UE 3. Thus, it is possible to obtain an effect of reducing a load applied to the macro-cell base station 1.

According to the first embodiment, it is possible to select a base station used to transmit user-plane signals to the same UE 3 according to the QoS.

The first embodiment can employ the conventional one for the S-GW 5 without causing any influence to the S-GW 5. For example, it is possible to employ a different configuration than the first embodiment, wherein the S-GW 5 delivers user-plane signals destined for the UE 3 to different destination such that a specific user-plane signal is delivered to the macro-cell base station 1 while any user-plane signal other than the specific user-plane signal is delivered to the small-cell base station 2. In this case, it is necessary to implement additional functions in the S-GW 5, e.g. a routing function of user-plane signals and a "Path switch" function between the S-GW 5 and the base stations 1, 2. However, the present embodiment does not need any function added to the S-GW 5.

According to the first embodiment, a specific user-plane signal among the user-plane signals destined for the UE 3 is solely transmitted from the small-cell base station 2 to the macro-cell base station 1. In the conventional wireless communication system of Fig. 12, all the user-plane signals destined for UE are transmitted from the macro-cell base station 1 to the small-cell base station 2. In contrast, the first embodiment is designed so solely transmit a specific user-plane signal (e.g. a VoIP signal), among the user-plane signals destined for the UE 3, from the small-cell base station 2 to the macro-cell base station 1; hence, it is possible to obtain an effect of easing requirements of transmission performance between the small-cell base station 2 and the macro-cell base station 1. Herein, it is possible to enhance the effect with respect to VoIP signals having smaller amounts of data than moving-image data.

In the first embodiment, the "dual connectivity" of the UE 3 indicates that the UE 3 maintains the "C-plane connection" with the small-cell base station 2 (SCeNB) while concurrently maintaining the "U-plane connection" with both the macro-cell base station 1 (MeNB) and the small-cell base station 2 (SCeNB).

The foregoing description concerning the first embodiment refers to the flow of user-plane signals in a downlink direction (i.e. a direction from the base station to the UE), but the first embodiment can be similarly applied to the flow of user-plane signals in an uplink direction (i.e. a direction from the UE to the base station).

For example, the flow of user-plane signals in an uplink direction will be described in conjunction with Fig. 4. The UE 3 wirelessly transmits a VoIP signal to the macro-cell base station 1. Next, the macro-cell base station 1 receives the VoIP signal from the UE 3 so as to transmit the VoIP signal to the small-cell base station 2. Next, the small-cell base station 2 receives the VoIP signal from the macro-cell base station 1 so as to transmit the VoIP signal to the S-GW 5 through the S1-U interface. Additionally, the UE 3 wirelessly transmits any user-plane signal other than the VoIP signal to the small-cell base station 2. Next, the small-cell base station 2 receives any user-plane signal other than the VoIP signal from the UE 3 so as to transmit it to the S-GW 5 through the S1-U interface.

The first embodiment applied to both the uplink direction and the downlink direction may carry out bidirectional data transfer based on the QoS in the user plane between the macro-cell base station 1 and the small-cell base station 2.

### <Second Embodiment>

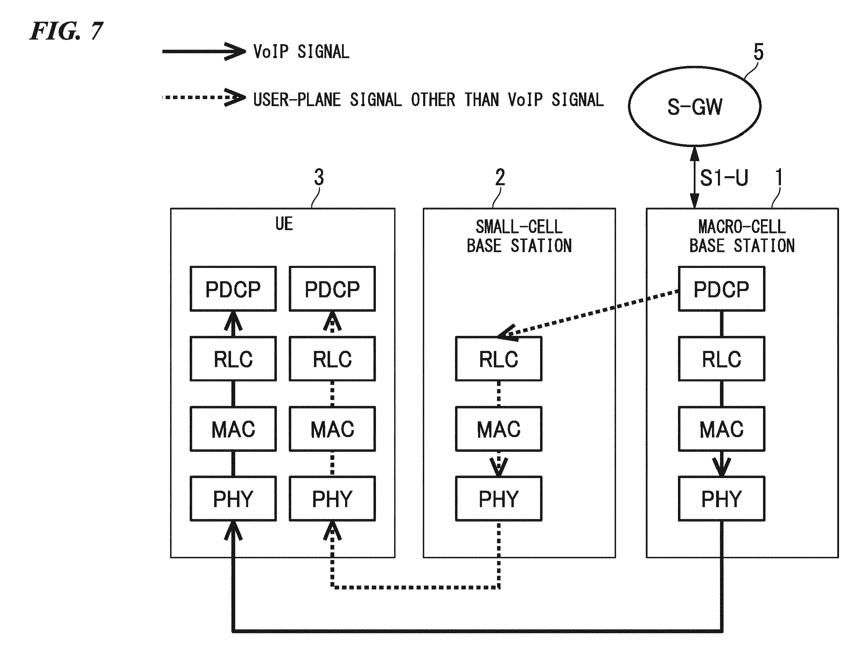

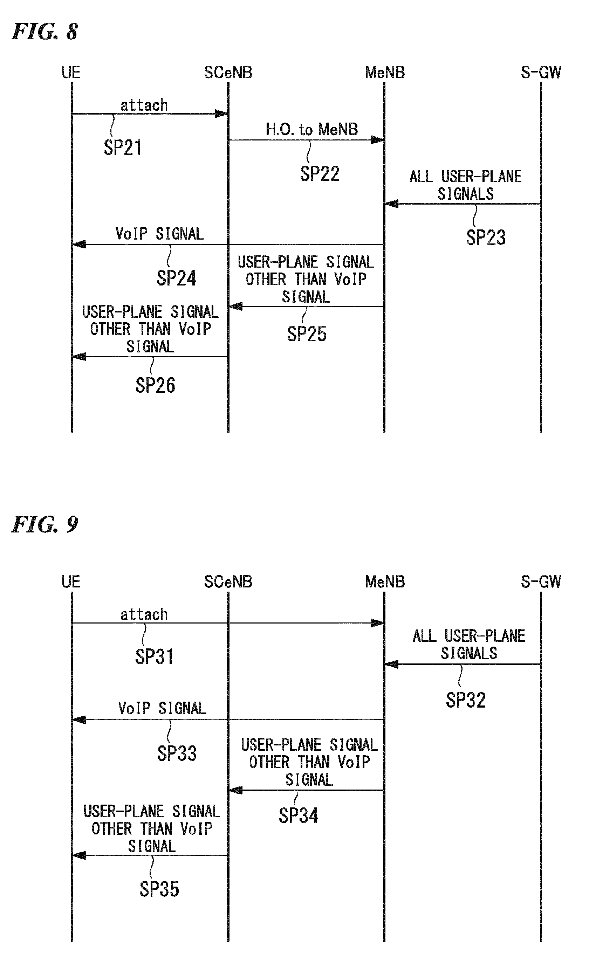

The second embodiment combines the configuration of the wireless communication system of the first embodiment with the configuration of the wireless communication system shown in Fig. 7. Fig. 7 is an explanatory diagram used to explain the operation of the wireless communication system devoted to the second embodiment. Figs. 8 and 9 are sequence charts showing the sequences of the wireless communication system shown in Fig. 7.

First, a signal flow will be described with reference to Fig. 7. In Fig. 7, the UE 3 located in a small cell is wirelessly connectible to both the macro-cell base station 1 and the small-cell base station 2. The S-GW 5 transmits all the user-plane signals destined for the UE 3 to the macro-cell base station 1 through the S1-U interface.

The macro-cell base station 1 receives the user-plane signals destined for the UE 3 from the S-GW 5 through the S1-U interface so as to transmit any user-plane signal other than a specific user-plane signal, among the received user-plane signals, to the small-cell base station 2. Herein, the specific user-plane signal is identical to the foregoing one described in the first embodiment.

The small-cell base station 2 receives the user-plane signals destined for the UE 3 from the macro-cell base station 1 so as to wirelessly transmit all user-plane signals (i.e. any user-plane signal other than a specific user-plane signal) to the UE 3. The macro-cell base station 1 receives the user-plane signals destined for the UE 3 from the S-GW 5 through the S1-U interface so as to wirelessly transmit a specific user-plane signal, among the received user-plane signals, to the UE 3.

The second embodiment refers to a VoIP signal representing an example of a specific user-plane signal.

As shown in Fig. 7, the macro-cell base station 1 receives the user-plane signals destined for the UE 3 from the S-GW 5 through the S1-U interface so as to transmit any user-plane signal other than a VoIP signal, among the received user-plane signals, to the small-cell base station 2. The small-cell base station 2 receives any user-plane signal (i.e. any user-plane signal other than a VoIP signal) destined for the UE 3 from the macro-cell base station 1 so as to wirelessly transmit it to the UE 3. The macro-cell base station 1 receives the user-plane signals destined for the UE 3 from the S-GW 5 through the S1-U interface so as to wirelessly transmit a VoIP signal, among the received user-plane signals, to the UE 3.

As the protocol configurations applied between the macro-cell base station 1 and the small-cell base station 2, it is possible to name protocol configurations 2-1, 2-2, and 2-3 as follows.

### (Protocol Configuration 2-1)

A specific user-plane signal is delivered to the small-cell base station 2 in the stage of the input data (SDU) to the PDCP layer of the macro-cell base station 1.

### (Protocol Configuration 2-2)

A specific user-plane signal is delivered to the small-cell base station 2 in the stage of the output data (PDU) from the PDCP layer of the macro-cell base station 1. Fig. 7 shows an example of the protocol configuration 2-2.

### (Protocol Configuration 2-3)

A specific user-plane signal is delivered to the small-cell base station 2 in the stage of the output data (PDU) from the RLC layer of the macro-cell base station 1.

In the wireless communication system shown in Fig. 7, for example, the macro-cell base station 1 may devote to a serving base station for the UE 3 in the control plane. In this case, the control-plane signals destined for the UE 3 are wirelessly transmitted from the macro-base station 1 to the UE 3. In the wireless communication system shown in Fig. 7, the second embodiment will be described with respect to the macro-cell base station 1 devoted to a serving base station for the UE 3 in the control plane.

Next, the sequences of the wireless communication system shown in Fig. 7 will be described with reference to Figs. 8 and 9. Fig. 8 shows a sequence in which the UE 3 is firstly connected to the small-cell base station 2 (SCeNB). Fig. 9 shows a sequence in which the UE 3 is firstly connected to the macro-cell base station 1 (MeNB).

First, the sequence in which the UE 3 is firstly connected to the small-cell base station 2 (SCeNB) will be described with reference to Fig. 8.
(Step SP21) The UE 3 makes "Attach" with the small-cell base station 2 (SCeNB).
(Step SP22) The small-cell base station 2 (SCeNB) carries out a handover of the UE 3 with the macro-cell base station 1 (MeNB).
(Step SP23) The S-GW 5 transmits all the user-plane signals destined for the UE 3 to the macro-cell base station 1 (MeNB) through the S1-U interface.
(Step SP24) The macro-cell base station 1 (MeNB) receives the user-plane signals destined for the UE 3 from the S-GW 5 through the S1-U interface so as to wirelessly transmit a VoIP signal, among the received user-plane signals, to the UE 3.
(Step SP25) The macro-base station 1 (MeNB) receives the user-plane signals destined for the UE 3 from the S-GW 5 through the S1-U interface so as to transmit any user-plane signal other than the VoIP signal, among the received user-plane signals, to the small-cell base station 2 (SCeNB).
(Step SP26) The small-cell base station 2 (SCeNB) receives any user-plane signal destined for the UE 3 other than the VoIP signal from the macro-cell base station 1 (MeNB) so as to transmit it to the UE 3.

Next, the sequence in which the UE 3 is firstly connected to the macro-cell base station 1 (MeNB) will be described with reference to Fig. 9.
(Step SP31) The UE 3 makes "Attach" with the macro-cell base station 1 (MeNB).
(Step SP32) The S-GW 5 transmits all the user-plane signals destined for the UE 3 to the macro-cell base station 1 (MeNB) through the S1-U interface.
(Step SP33) The macro-cell base station 1 (MeNB) receives the user-plane signals destined for the UE 3 from the S-GW 5 through the S1-U interface so as to wirelessly transmit a VoIP signal, among the received user-plane signals, to the UE 3.
(Step SP34) The macro-cell base station 1 (MeNB) receives the user-plane signals destined for the UE 3 from the S-GW 5 through the S1-U interface so as to transmit any user-plane signal other than the VoIP signal, among the received user-plane signals, to the small-cell base station 2 (SCeNB).
(Step SP35) The small-cell base station 2 (SCeNB) receives any user-plane signal destined for the UE 3 other than the VoIP signal from the macro-cell base station 1 (MeNB) so as to wirelessly transmit it to the UE 3.

The determination as to whether the second embodiment uses the wireless communication system of the first embodiment or the wireless communication system of Fig. 7 may depend on the applied conditions which are determined in advance. For example, it is possible to determine whether to use the wireless communication system of the first embodiment or the wireless communication system of Fig. 7 based on the status of the UE 3. For example, it is possible to name the moving condition of the UE 3 as the status of the UE 3. For example, it is possible to determine the movement of the UE 3 based on any movement determination condition which is used to determine the movement of the UE 3.

Next, an operation concerning an example of a combination of the wireless communication system of the first embodiment and the wireless communication system of Fig. 7 will be described with reference to Fig. 10. Fig. 10 is a flowchart showing the processing of the wireless communication system of the second embodiment. In the flowchart of Fig. 10, a base station subjected to "Attach" with the UE 3 determines whether to use the wireless communication system of the first embodiment or the wireless communication system of Fig. 7 based on the moving condition of the UE 3.
(Step SP101) This step determines the movement of the UE 3.
(Step SP102) The flow proceeds to step SP103 when the decision result of step SP101 indicates movement, but the flow proceeds to step SP104 when the decision result does not indicate movement.
(Step SP103) This step determines the connection destination of the S1-U interface at the macro-cell base station 1 with respect to the UE 3 (which is determined to be moved). In this case, the second embodiment uses the wireless communication system of Fig. 7. It is assumed that the macro-cell base station 1, compared to the small-cell base station 2, can produce a good communication quality with the UE 3 being moved.
(Step SP104) This step determines the connection destination of the S1-U interface at the small-cell base station 2 with respect to the UE 3 (which is determined not to be moved). In this case, the second embodiment uses the wireless communication system of the first embodiment (Fig. 4).

According to the second embodiment, a specific user-plane signal among the user-plane signals destined for the UE 3 is wirelessly transmitted from the macro-cell base station 1 to the UE 3, while any user-plane signal other than the specific user-plane signal is wirelessly transmitted from the small-cell base station 2 to the UE 3. Thus, it is possible to obtain an effect of reducing a load applied to the macro-cell base station 1.

According to the second embodiment, it is possible to select a base station used to transmit user-plane signals according to QoS with respect to the same UE 3.

Similar to the first embodiment, the second embodiment can directly use the conventional S-GW without causing any influence to the S-GW 5.

For example, the second embodiment applies the wireless communication system of Fig. 7 with respect to the UE 3 which is determined to be moved (i.e. non-static UE) while applying the wireless communication system of the first embodiment (Fig. 4) with respect to the UE 3 which is determined not to be moved (i.e. static UE). Therefore, all the user-plane signals destined for the non-static UE are transmitted through the S1-U interface between the S-GW5 and the macro-cell base station 1, while all the user-plane signals destined for the static UE are transmitted through the S1-U interface between the S-GW 5 and the small-cell base station 2. In the conventional wireless communication system of Fig. 12, the user-plane traffic is centralized at the S1-U interface between the S-GW 5 and the macro-cell base station 1. In contrast, the second embodiment can distribute the user-plane traffic to the S1-U interface between the S-GW 5 and the macro-cell base station 1 and the S1-U interface between the S-GW 5 and the small-cell base station 2; hence, it is possible to obtain an effect of easing requirements of transmission performance concerning the S1-U interface.

For example, the second embodiment applies the wireless communication system of the first embodiment (Fig. 4) with respect to the static UE. Therefore, a specific user-plane signal among the user-plane signals destined for the static UE is solely transmitted from the small-cell base station 2 to the macro-cell base station 1. In the conventional wireless communication system of Fig. 12, all the user-plane signals destined for the UE are transmitted from the macro-cell base station 1 to the small-cell base station 2. In contrast, the second embodiment is designed to transmit a specific user-plane signal (e.g. a VoIP signal), among the user-plane signals destined for the static UE, from the small-cell base station 2 to the macro-cell base station 1; thus, it is possible to obtain an effect of easing requirements of transmission performance in the small-cell base station 2 and the macro-cell base station 1. For example, it is possible to enhance the effect with respect to VoIP signals having smaller amounts of data than moving-image data.

In the second embodiment, the "dual connectivity" of the static UE indicates that the UE 3 maintains the "C-plane connection" with the small-cell base station 2 (SCeNB) while the UE 3 concurrently maintains the "U-plane connection" with both the macro-cell base station 1 (MeNB) and the small-cell base station 2 (SCeNB).

In the second embodiment, the "dual connectivity" of the non-static UE indicates that the UE 3 maintains the "C-plane connection" with the macro-cell base station 1 (MeNB) while the UE 3 concurrently maintains the "U-plane connection" with both the macro-cell base station 1 (MeNB) and the small-cell base station 2 (SCeNB).

The second embodiment is described with respect to the flow of user-plane signals in a downlink direction (i.e. a direction from a base station to UE), but the second embodiment can be similarly applied to the flow of user-plane signals in an uplink direction (i.e. a direction from UE to a base station).

For example, the flow of user-plane signals in an uplink direction corresponding to Fig. 7 will be described. The UE 3 wirelessly transmits a VoIP signal to the macro-cell base station 1. Next, the macro-cell base station 1 transmits the VoIP signal received from the UE 3 to the S-GW 5 through the S1-U interface. Additionally, the UE 3 wirelessly transmits any user-plane signal other than the VoIP signal to the small-cell base station 2. Next, the small-cell base station 2 transmits any user-plane signal, received from the UE 3, other than the VoIP signal to the macro-cell base station 1. Next, the macro-cell base station 1 transmits any user-plane signal, received from the small-cell base station 2, other than the VoIP signal to the S-GW 5 through the S1-U interface.

The second embodiment applied to both the uplink direction and the downlink direction carries out bidirectional data transfer between the macro-cell base station 1 and the small-cell base station 2 in the user plane based on the QoS.

Heretofore, the present invention have been described by way of the embodiments, but the concrete configuration is not necessarily limited to the foregoing embodiments; hence, the present invention may embrace design choices without departing from the subject matter of the invention.

In this connection, it is possible to employ a macro-cell base station using a frequency division duplex (FDD) system and a small-cell base station using a time division duplex (TDD) system. In this case, the UE does not need to concurrently receive sub-frames from the macro-cell base station and the small-cell base station; hence, the foregoing embodiments are applicable to any UE (non-CA UE) non-compatible to carrier aggregation (CA). In this case, the timing of the macro-cell base station, using the FDD system, transmitting sub-frames matches the timing of the small-cell base station, using the TDD system, transmitting sub-frames in an uplink direction (i.e. a direction from a terminal to a base station). Additionally, the timing of the small-cell base station, using the TDD system, transmitting sub-frames matches the timing of transmitting sub-frames in a downlink direction (i.e. a direction from a base station to a terminal). When the timing of transmitting sub-frames is determined according to UE specifications, it is unnecessary to notify the UE of the timing of transmitting sub-frames by way of signaling.

The foregoing embodiments refer to LTE as an example of wireless communication systems, but they can be applied to other wireless communication systems. Additionally, the foregoing embodiments can be similarly applied to any wireless communication network other than HetNet.

In this connection, macro cells and small cells concerning the foregoing embodiments may use different frequency bands, or they may use the same frequency band since the present invention requires that the coverage of macro cells should overlap the coverage of small cells. For example, it is possible to provide a plurality of cells having different classes of transmission power in the same frequency band. The foregoing embodiments are applicable to a first cell and a second cell which overlap with each other in terms of the coverage, wherein the first cell and the second cell may have the same size of coverage or different sizes of coverage.

### REFERENCE SIGNS LIST

1 macro-cell base station
2 small-cell base station
3 UE
4 core network
5 S-GW
6 MME
11 core network communication part
12, 31 wireless communication part
13, 32 controller
14, 33 storage unit
15 inter-station communication part
34 operation part
35 display

## Claims

1. A wireless communication method adapted to a wireless communication system including a wireless terminal device wirelessly connectible to both a wireless base station device of a first cell and a wireless base station device of a second cell whose coverage overlaps coverage of the first cell, comprising:
transmitting all user-plane signals destined for the wireless terminal device to the wireless base station device of the second cell;
transmitting a specific user-plane signal, among the user-plane signals destined for the wireless terminal device, from the wireless base station of the second cell to the wireless base station device of the first cell, and then wirelessly transmitting the specific user-plane signal from the wireless base station device of the first cell to the wireless terminal device; and
wirelessly transmitting other user-plane signals other than the specific user-plane signal, among the user-plane signals destined for the wireless terminal device, from the wireless base station device of the second cell to the wireless terminal device.

2. A wireless communication method adapted to a wireless communication system including a wireless terminal device wirelessly connectible to both a wireless base station device of a first cell and a wireless base station device of a second cell whose coverage overlaps coverage of the first cell, comprising:
wirelessly transmitting a specific user-plane signal among user-plane signals from the wireless terminal device to the wireless base station device of the first cell, and then transmitting the specific user-plane signal from the wireless base station device of the first cell to the wireless base station device of the second cell;
wirelessly transmitting other user-plane signals other than the specific user-plane signal from the wireless terminal device to the wireless base station device of the second cell; and
transmitting all the user-plane signals from the wireless base station device of the second cell to a core network.

3. A wireless communication method adapted to a wireless communication system including a wireless terminal device wirelessly connectible to both a wireless base station device of a first cell and a wireless base station device of a second cell whose coverage overlaps coverage of the first cell, implementing a first method or a second method with the wireless terminal device,
wherein the first method includes the steps of:
transmitting all user-plane signals destined for the wireless terminal device to the wireless base station device of the second cell;
transmitting a specific user-plane signal, among the user-plane signals destined for the wireless terminal device, from the wireless base station of the second cell to the wireless base station device of the first cell, and then wirelessly transmitting the specific user-plane signal from the wireless base station device of the first cell to the wireless terminal device; and
wirelessly transmitting other user-plane signals other than the specific user-plane signal, among the user-plane signals destined for the wireless terminal device, from the wireless base station device of the second cell to the wireless terminal device, and
wherein the second method includes the steps of:
transmitting all user-plane signals destined for the wireless terminal device to the wireless base station of the first cell;
wirelessly transmitting a specific user-plane signal among the user-plane signals destined for the wireless terminal device from the wireless base station device of the first cell to the wireless terminal device;
transmitting other user-plane signals other than the specific user-plane signal, among the user-plane signals destined for the wireless terminal device, from the wireless base station device of the first cell to the wireless base station device of the second cell; and
wirelessly transmitting other user-plane signals other than the specific user-plane signal from the wireless base station device of the second cell to the wireless terminal device.

4. A wireless communication method adapted to a wireless communication system including a wireless terminal device wirelessly connectible to both a wireless base station device of a first cell and a wireless base station device of a second cell whose coverage overlaps coverage of the first cell, implementing a first method or a second method,
wherein the first method includes the steps of:
wirelessly transmitting a specific user-plane signal among user-plane signals from the wireless terminal device to the wireless base station device of the first cell, and then transmitting the specific user-plane signal from the wireless base station device of the first cell to the wireless base station device of the second cell;
wirelessly transmitting other user-plane signals other than the specific user-plane signal from the wireless terminal device to the wireless base station device of the second cell; and
transmitting all the user-plane signals from the wireless base station device of the second cell to a core network, and
wherein the second method includes the steps of:
wirelessly transmitting the specific user-plane signal from the wireless terminal device to the wireless base station device of the first cell;
wirelessly transmitting other user-plane signals other than the specific user-plane signal from the wireless terminal device to the wireless base station device of the second cell, and then transmitting the other user-plane signals other than the specific user-plane signal from the wireless base station device of the second cell to the wireless base station device of the first cell; and
transmitting all the user-plane signals from the wireless base station device of the first cell to the core network.

5. The wireless communication method according to claim 3 or 4, wherein the first cell is a macro cell while the second cell is a small cell.

6. The wireless communication method according to claim 5, wherein it is determined whether to use the first method or the second method based on a movement status of the wireless terminal device.

7. The wireless communication method according to claim 6, wherein the first method is used for the wireless terminal device whose movement is not determined while the second method is used for the wireless terminal device whose movement is determined.

8. The wireless communication method according to any one of claims 1 to 7, wherein the specific user-plane signal is a user-plane signal indicating a specific QoS (Quality of Service).

9. The wireless communication method according to claim 8, wherein bidirectional data transfer based on the QoS is carried out in a user plane between the wireless base station device of the first cell and the wireless base station device of the second cell.

10. The wireless communication method according to any one of claims 1 to 9, wherein the specific user-plane signal is a VoIP (Voice over Internet Protocol) signal.

11. In a wireless communication system including a wireless terminal device wirelessly connectible to both a wireless base station device of a first cell and a wireless base station device of a second cell whose coverage overlaps coverage of the first cell, the wireless base station device of the second cell includes
a core network communication part configured to receive all user-plane signals destined for the wireless terminal device from a core network,
an inter-station communication part configured to transmit a specific user-plane signal, among the user-plane signals destined for the wireless terminal device, to the wireless base station device of the first cell, and
a wireless communication part configured to wirelessly transmit other user-plane signals other than the specific user-plane signal, among the user-plane signals destined for the wireless terminal device, to the wireless terminal device.

12. In a wireless communication system including a wireless terminal device wirelessly connectible to both a wireless base station device of a first cell and a wireless base station device of a second cell whose coverage overlaps coverage of the first cell, the wireless base station device of the second cell includes
an inter-station communication part configured to receive a specific user-plane signal, among user-plane signals from the wireless terminal device, via the wireless base station device of the first cell,
a wireless communication part configured to wirelessly receive other user-plane signals other than the specific user-plane signal, among the user-plane signals from the wireless terminal device, from the wireless terminal device, and
a core network communication part configured to transmit all the user-plane signals from the wireless terminal device to a core network.

13. In a wireless communication system including a wireless terminal device wirelessly connectible to both a wireless base station device of a first cell and a wireless base station device of a second cell whose coverage overlaps coverage of the first cell, the wireless base station device of the first cell includes
an inter-station communication part configured to receive a specific user-plane signal among user-plane signals destined for the wireless terminal device from the wireless base station device of the second cell configured to receive all the user-plane signals destined for the wireless terminal device from a core network, and
a wireless communication part configured to wirelessly transmit the specific user-plane signal to the wireless terminal device.

14. In a wireless communication system including a wireless terminal device wirelessly connectible to both a wireless base station device of a first cell and a wireless base station device of a second cell whose coverage overlaps coverage of the first cell, the wireless base station device of the first cell includes
a wireless communication part configured to wirelessly receive a specific user-plane signal, among user-plane signals from the wireless terminal device, from the wireless terminal device, and
an inter-station communication part configured to transmit the specific user-plane signal to the wireless base station device of the second cell configured to transmit all the user-plane signals from the wireless terminal device to a core network.

15. The wireless base station device according to any one of claims 11 to 14, wherein the first cell is a macro cell while the second cell is a small cell.

16. The wireless base station device according to claim 15, wherein the wireless terminal device is a wireless terminal device whose movement is not determined.

17. In a wireless communication system including a wireless terminal device wirelessly connectible to both a wireless base station device of a first cell and a wireless base station device of a second cell whose coverage overlaps coverage of the first cell, the wireless base station device of the first cell includes
a core network communication part configured to receive all user-plane signals destined for the wireless terminal device from a core network,
a wireless communication part configured to wirelessly transmit a specific user-plane signal, among the user-plane signals destined for the wireless terminal device, to the wireless terminal device, and
an inter-station communication part configured to transmit other user-plane signals other than the specific user-plane signal, among the user-plane signals destined for the wireless terminal device, to the wireless base station device of the second cell.

18. In a wireless communication system including a wireless terminal device wirelessly connectible to both a wireless base station device of a first cell and a wireless base station device of a second cell whose coverage overlaps coverage of the first cell, the wireless base station device of the first cell includes
an inter-station communication part configured to receive other user-plane signals other than a specific user-plane signal, among user-plane signals destined for the wireless terminal device, via the wireless base station device of the second cell,
a wireless communication part configured to wirelessly receive the specific user-plane signal among the user-plane signals from the wireless terminal device from the wireless terminal device, and
a core network communication part configured to transmit all the user-plane signals from the wireless terminal device to a core network.

19. In a wireless communication system including a wireless terminal device wirelessly connectible to both a wireless base station device of a first cell and a wireless base station device of a second cell whose coverage overlaps coverage of the first cell, the wireless base station device of the second cell includes
an inter-station communication part configured to receive other user-plane signals other than a specific user-plane signal among user-plane signals destined for the wireless terminal device from the wireless base station device of the first cell configured to receive all the user-plane signals destined for the wireless terminal device from a core network, and
a wireless communication part configured to wirelessly transmit the other user-plane signals other than the specific user-plane signal to the wireless terminal device.

20. In a wireless communication system including a wireless terminal device wirelessly connectible to both a wireless base station device of a first cell and a wireless base station device of a second cell whose coverage overlaps coverage of the first cell, the wireless base station device of the second cell includes
a wireless communication part configured to wirelessly receive other user-plane signals other than a specific user-plane signal, among user-plane signals from the wireless terminal device, from the wireless terminal device, and
an inter-station communication part configured to transmit the other user-plane signals other than the specific user-plane signal to the wireless base station device of the first cell configured to transmit all the user-plane signals from the wireless terminal device to a core network.

21. The wireless base station device according to any one of claims 17 to 20, wherein the first cell is a macro cell while the second cell is a small cell.

22. The wireless base station device according to claim 21, wherein the wireless terminal device is a wireless terminal device whose movement is determined.

23. The wireless base station device according to any one of claims 11 to 22, wherein the specific user-plane signal is a user-plane signal indicating a specific QoS (Quality of Service).

24. The wireless base station device according to claim 23, wherein the inter-station communication part carries out bidirectional data transfer based on the QoS in a user plane between the wireless base station device of the first cell and the base station device of the second cell.

25. The wireless base station device according to any one of claims 11 to 24, wherein the specific user-plane signal is a VoIP (Voice over Internet Protocol) signal.
